# EUROPÄISCHE PATENTSCHRIFT

(11) **EP 3 223 395 B1**
(45) Veröffentlichungstag und Bekanntmachung des Hinweises auf die Patenterteilung: **28.08.2019**
(21) Anmeldenummer: 17161983.6
(22) Anmeldetag: 10.03.2015
(51) Int. Cl.: H02K 3/38, H02K 3/52

(54) **ELEKTROMAGNETENSTRUKTUR EINER ELEKTRISCHEN MASCHINE**
ELECTROMAGNETIC STUCTURE OF AN ELECTRIC MACHINE
STRUCTURE ÉLECTROMAGNÉTIQUE D'UNE MACHINE ÉLECTRIQUE

(30) Priorität: 10.03.2014 DE 102014003055
(43) Veröffentlichungstag der Anmeldung: 27.09.2017
(62) Teilanmeldung aus: 15711077.6
(73) Patentinhaber: Brose Fahrzeugteile GmbH & Co. Kommanditgesellschaft, Würzburg, 97076 Würzburg (DE)
(72) Erfinder: HAUCK, Peter, 97218 Gerbrunn (DE); HAUPT, Oliver, 97070 Würzburg (DE); KNOPF, Maximilian, 81673 München (DE); PORTNER, Stefan, 97236 Randersacker (DE)
(74) Vertreter: FDST Patentanwälte

(56) Entgegenhaltungen:
- EP-A2- 1 184 957
- EP-A2- 1 372 242
- EP-A2- 1 783 880
- DE-A1- 10 261 611
- DE-A1- 19 961 339
- DE-A1-102005 002 364
- DE-A1-102010 063 304
- US-A1- 2001 048 262
- US-A1- 2008 157 610
- US-A1- 2009 230 793

## Beschreibung

Die Erfindung betrifft eine Elektromagnetenstruktur einer elektrischen Maschine, insbesondere eines Verstellantriebs eines Kraftfahrzeugs, mit einer Anzahl von zu einer Kreisstruktur angeordneten Spulen.

Verstellantriebe bei Kraftfahrzeugen, insbesondere Servolenkungen, sind typischerweise in Form eines Elektromotors ausgeführt. Derartige Elektromotoren werden mittels Drehstrom betrieben, und weisen einen feststehenden Stator mit einer Elektromagnetenstruktur auf, die eine Anzahl von zu einer Kreisstruktur angeordneten Spulen als Magnetpole umfasst. Die Spulen weisen jeweils eine Spulenwicklung und einen Anschluss auf, die aus einem elektrisch leitenden Material hergestellt sind. Die Spulenwicklungen der Elektromagnetenstruktur sind vorzugsweise jeweils auf einen elektrisch nicht leitfähigen Spulenkörper gewickelt. Im Inneren der Elektromagnetenstruktur ist ein Rotor drehbar angeordnet, der bei einem bürstenlosen Elektromotor mit Permanentmagneten und bei einem sogenannten Kommutatormotor selbst mit einer Spulen- oder Feldwicklung versehen ist. Fließt durch die von den statorseitigen Spulen gebildeten Phasenwicklungen ein elektrischer Strom, so baut sich ein mit dem Magnetfeld des Rotors wechselwirkendes Erregerfeld auf, in Folge dessen sich der Rotor um dessen Rotorachse dreht.

Üblicherweise sind jeweils zwei der Spulen zu einem Spulenpaar zusammengeschalten, wobei mit den jeweiligen Anschlüssen eine Leiterbahn elektrisch kontaktiert ist. Bei einer Erschütterung der Elektromagnetenstruktur können sich hierbei Leiterbrücken von Spulenpaaren unterschiedlicher Phasen elektrisch leitend berühren. Die entstehenden Phasenschlüsse bedingen ein Fehlverhalten des Elektromotors und ein unerwünschtes, sicherheitskritisches, erhöhtes Bremsmoment, insbesondere bei Lenkungsanwendungen bei Servolenkungen.

Üblicherweise werden zur Vermeidung dieses Phasenschluss-Problems die Leiterbrücken mittels eines elektrisch nicht leitenden Isolierschlauches aus Kunststoff überzogen. Dadurch ist ein zusätzlicher Produktionsschritt in der Herstellung des Statorsystems gegeben, der die Herstellungskosten und Herstellungsdauer des Statorsystems negativ beeinflusst.

Aus DE 102 61 611 A1 ist ein Stator einer elektrischen Maschine mit in einer Kreisstruktur angeordneten Spulen bekannt, die jeweils einen Anschluss aufweisen. Jeweils drei Spulen sind miteinander verschaltet.

Aus EP 1 783 880 A2 ist eine elektromotorische Kraftstoffpumpe bekannt. Es sind mehrere Ausführungsbeispiele beschrieben, bei denen die einzelnen Spulen mittels einer Verbindung elektrisch verbunden sind.

Aus DE 10 2010 063 304 A1 ist ein Befestigungselement bekannt, welches scheibenförmig ausgestaltet ist und nach innen weisende Fortsätze aufweist. Auf diese sind im Montagezustand elektrische Spulen aufgeschoben und kraftschlüssig dort fixiert.

Aus DE 199 61 339 A1 ist ein Stator bekannt, der ein sternförmiges Paket aufweist, welches in ein Jochpaket eingesetzt wird
Der Erfindung liegt die Aufgabe zugrunde, eine besonders geeignete Elektromagnetenstruktur einer elektrischen Maschine und eine besonders geeignete elektrischen Maschine anzugeben, die insbesondere einfach und zweckmäßigerweise kostengünstig herzustellen sind, wobei die Sicherheit vorteilhafterweise erhöht ist.

Hinsichtlich der Elektromagnetenstruktur wird diese Aufgabe durch die Merkmale des Anspruchs 1 und hinsichtlich der elektrischen Maschine durch die Merkmale des Anspruchs 10 erfindungsgemäß gelöst. Vorteilhafte Ausgestaltungen und Weiterbildungen sind Gegenstand der Unteransprüche.

Die Elektromagnetenstruktur ist Bestandteil einer elektrischen Maschine. Die elektrische Maschine ist insbesondere ein Elektromotor, wobei der Elektromotor bürstenbehaftet (Kommutatormotor) oder bürstenlos ist. Zweckmäßigerweise ist der Elektromotor Bestandteil eines Verstellantriebs eines Kraftfahrzeuges, wobei vorzugsweise eine Servolenkung den Verstellantrieb aufweist. Die Elektromagnetenstruktur umfasst eine Anzahl von Spulen mit jeweils einer Spulenwicklung, die aus einem elektrisch leitfähigen Material hergestellt ist. Die Spulenwicklungen sind beispielweise aus einem lackierten Kupferdraht hergestellt. Jede Spule umfasst ferner einen Anschluss, der elektrisch mit der Spulenwicklung kontaktiert ist und zweckmäßigerweise einstückig mit dieser ist. Insbesondere sind die Spulenwicklungen auf einen Spulenkörper aus einem elektrisch nicht leitfähigen Material gewickelt, was deren Stabilität erhöht. Die Spulen sind zu einer Kreisstruktur angeordnet, wobei die zentralen Öffnungen der Spulenwicklungen radial orientiert sind. Mit anderen Worten weist die Anordnung der Spulenkörper eine hohlzylindrische Form auf. Die Axialrichtung der elektrischen Maschine ist parallel zur Rotationsachse, die mit der Achse der Elektromagnetenstruktur zusammenfällt. Der Anschluss jeder Spule ist insbesondere in Axialrichtung der jeweiligen Spulenwicklung angeordnet.

Benachbarte Spulenwicklungen sind zweckmäßigerweise gegeneinander elektrisch isoliert, beispielsweise sind sie zueinander beabstandet, wobei innerhalb des auf diese Weise gebildeten Raums zweckmäßigerweise ein elektrischer Isolator angeordnet ist. Der Isolator ist insbesondere ein Kunststoff oder Luft. Mittels jeweils einer Leiterbrücke, auch als Drahtbrücke bezeichnet, werden zwei Spulenwicklungen der Elektromagnetenstruktur elektrisch miteinander zu einem Spulenpaar verbunden, wobei die Spulenwicklungen zweckmäßigerweise nicht direkt benachbart zueinander sind. Die Leiterbrücke ist hierzu mit den jeweiligen Anschlüssen der Spulen kontaktiert. Zweckmäßigerweise sind die Leiterbrücken einstückig mit den jeweiligen Anschlüssen und insbesondere mit den zugeordneten Spulenwicklungen. Auf diese Weise ist die Herstellung vereinfacht. Die Leiterbrücken sind in Axialrichtung zu den zugeordneten Spulenwicklungen beabstandet. Vorzugsweise befinden sich sämtliche Leiterbrücken in Axialrichtung auf einer gemeinsamen Seite der Spulenwicklungen.

Die Elektromagnetenstruktur umfasst eine Führungsplatte mit einer zu der Anzahl von Leiterbrücken korrespondierenden Anzahl von Aufnahmen. Im Montagezustand ist in jeder Aufnahme eine Leiterbrücke angeordnet und/oder in dieser fixiert. Vorzugsweise sind die Leiterbrücken in den Aufnahmen klemmbefestigt. Mittels Einführen der Leiterbrücke in die korrespondierende Aufnahme ist eine vergleichsweise einfache Montage ermöglicht, wobei die Leiterbrücke vergleichsweise sicher gehalten ist. Zweckmäßigerweise ist jede Aufnahme mittels einer Nut gebildet. Der Querschnitt der nutenförmigen Aufnahmen ist zweckmäßigerweise an den Querschnitt der Leiterbrücken angepasst. Insbesondere ist der Querschnitt jeder Leiterbrücke kreisförmig und der jeder Nut im Wesentlichen ein Kreissegment größer als 180°. Auf diese Weise ist es ermöglicht, dass die Leiterbrücke kraftschlüssig innerhalb der jeweiligen Aufnahme einliegt. Mit anderen Worten wird bei der Montage der Elektromagnetenstruktur jede Leiterbrücke in die jeweilige hierzu korrespondierende Aufnahme eingeschnappt. Aufgrund der derartigen Befestigung kann auf eine Zuhilfenahme von Klebstoffen bei der Montage verzichtet werden.

Die Führungsplatte ist bevorzugterweise aus einem elektrisch nicht leitfähigen Material, insbesondere einem Kunststoff, gefertigt und/oder einstückig ausgeführt. Insbesondere ist zwischen den Spulenwicklungen und den Leiterbahnen zumindest teilweise die Führungsplatte angeordnet. Auf diese Weise ist mittels der Führungsplatte eine Beabstandung der Leiterbrücken und somit eine galvanische Trennung zwischen diesen gewährleistet, wobei bei der Herstellung lediglich ein Bauteil, nämlich die Führungsplatte, montiert werden muss.

Aufgrund der Verwendung der Führungsplatte wird somit die Position der Leiterbrücke stabilisiert und eine Bewegung derselben gegen weitere elektrisch leitende Komponenten, insbesondere einer benachbarten Leiterbrücke, während des Betriebs der elektrischen Maschine verhindert. Aufgrund der Verwendung der Führungsplatte kann weiterhin das Spulenpaar ohne einen zusätzlichen Produktionsschritt gewickelt und verbaut werden. Dadurch verringern sich vorteilhaft die Herstellungskosten der Elektromagnetenstruktur.

Die Führungsplatte ist vorzugsweise auf der Seite eines B-seitigen Lagerschildes, also gegenüber einem Wellenausgang der elektrischen Maschine angeordnet. Auf diese Weise wird eine Beschädigung der Leiterbrücken und/oder der Führungsplatte bei einer Montage der elektrischen Maschine und einer Kopplung der Welle mit weiteren Bauteilen vermieden. Vorzugsweise sind die Leiterbrücken in Axialrichtung zwischen einer Elektronik und den Spulenwicklungen angeordnet. Die Elektromagnetenstruktur ist zweckmäßigerweise Bestandteil eines Stators und/oder umfasst zwischen zehn und 16 Spulen. Insbesondere weist die Elektromagnetenstruktur zwölf Spulen und sechs Leiterbrücken auf.

In einer bevorzugten Ausgestaltung sind die Aufnahmen bezüglich der Spulenwicklungen radial beabstandet. Sofern die elektrische Maschine ein Innenläufer und die Elektromagnetenstruktur Bestandteil eines Stators ist, sind die Aufnahmen zweckmäßigerweise nach innen versetzt, weisen also folglich einen geringeren Abstand zur Rotationsachse auf als die Spulenwicklungen. In einer bevorzugten Ausgestaltungsform weist die Führungsplatte eine zentrale Öffnung auf, die insbesondere konzentrisch mit der Kreisstruktur ist. Insbesondere ist die Führungsplatte im Bereich der Öffnung hohlzylindrisch geformt. Die Aufnahmen sind vorzugsweise auf der Mantelfläche des auf diese Weise gebildeten Hohlzylinders angeordnet, und sind somit radial nach innen zu den Spulenkörpern hin versetzt. Der Verlauf der Aufnahmen ist in einer derartigen Ausgestaltungsform beispielsweise im Wesentlichen tangential zu der Kreisstruktur.

Die Führungsplatte weist einen Stern mit radial gerichteten Fortsätzen auf, wobei jeder der Fortsätze innerhalb einer der Spulenwicklungen angeordnet ist. Auf diese Weise ist eine Positionierung der Spulen und der Führungsplatte vereinfacht. Beispielsweise sind die Fortsätze radial nach innen gerichtet. Das Freiende weist somit einen geringeren Abstand zur Rotationsachse auf, als die verbleibenden Bereiche des Sterns. Bevorzugt jedoch sind die Fortsätze radial nach außen gerichtet und die Freienden der Fortsätze bilden in radialer Richtung die äußere Begrenzung des Sterns. Auf diese Weise ist eine Montage der Spulen vereinfacht.

Zweckmäßigerweise weist jeder der Fortsätze ein Federelement auf, mittels dessen die jeweilige Spule klemmfixiert ist. Somit ist die eine Montage der Spulen vereinfacht. In einer bevorzugten Weiterbildungsform ist das Federelement eine Blattfeder, die insbesondere radial gerichtet ist. Zweckmäßigerweise ist die Blattfeder einstückig mit dem jeweiligen Fortsatz, was die Herstellungskosten reduziert. Vorteilhafterweise weist jede Spule eine zu dem Federelement korrespondierende Kontur auf, mittels derer das Federelement im Montagezustand verrastet ist. Zweckmäßigerweise ist mittels der Federelemente eine kraftschlüssige Verbindung zwischen den Spulen und der Führungsplatte erstellt. Folglich unterbleibt eine Bewegung dieser relativ zueinander, und eine Geräusch- sowie Materialbelastung ist verringert.

In einer vorteilhaften Ausführung ist der Stern insbesondere in einem direkten mechanischen Kontakt mit einem Blechpaket, wobei das Blechpaket in einer bevorzugten Ausführungsform das Statorblechpaket ist. Bei der Fertigung wird zunächst die Führungsplatte auf das Statorblechpaket aufgebracht und anschließend die Spulenwicklungen auf die Fortsätze des Sterns und des Statorblechpakets aufgesteckt. Bei dem Aufstecken, beziehungsweise bei der Montage in radialer Richtung ist zu beachten, dass der zunächst gespannte Draht der Leitungsbrücke zwischen den Spulenpaaren beim Aufstecken zunächst lose zwischen dem Spulenpaar hängt. Die Leiterbrücke wird in einem anschließenden Prozess in den Aufnahmen positioniert.

In einer geeigneten Weiterbildungsform ist die Form des Sterns gleich der Form eines Blechs des Blechpakets. Im Montagezustand liegt der Stern zweckmäßigerweise bündig an dem Blechpaket an, und die Fortsätze fluchten zweckmäßigerweise mit den Zähnen des Blechpakets. Insbesondere wird bei der Montage der Stern der Führungsplatte nach Art einer letzten beziehungsweise abschließenden Lage Blech gestapelt und auf diese Weise der Verbund aus dem Blechpaket und der Führungsplatte erstellt.

Zusammenfassend sind die Spulenkörper bevorzugt auf Zähnen des Blechpakets angeordnet. Mit anderen Worten ist jeder Zahn innerhalb jeweils einer Spulenwicklung angeordnet. Die Zähne verlaufen vorzugsweise radial, sodass das Blechpaket sternförmig ausgebildet ist. Bevorzugterweise befinden sich die beiden Spulenwicklungen jedes Spulenpaars auf Zähnen, die um im Wesentlichen 90° in der Kreisstruktur gegeneinander versetzt sind. Die Führungsplatte befindet sich zweckmäßigerweise zwischen den Leiterbrücken und dem Blech des Blechpakets, das den Leiterbrücken zugewandt ist. Insbesondere liegt die Führungsplatte auf dem Blechpaket auf und ist folglich in direktem mechanischem Kontakt mit dem Blechpaket.

Vorteilhafterweise sind die Aufnahmen in zwei Gruppen aufgeteilt, die punktsymmetrisch bezüglich der Rotationsachse angeordnet sind. In einer besonders vorteilhaften Ausgestaltung sind die Aufnahmen axial angeordnet. Mit anderen Worten verlaufen und/oder erstrecken sich die Aufnahmen in Axialrichtung. Die Aufnahmen selbst sind zueinander tangential beabstandet, sodass ebenfalls die Leiterbrücken zueinander tangential beabstandet sind. Zweckmäßigerweise ist jede Aufnahme mittels einer Nut gebildet, die sich in Axialrichtung erstreckt. Beispielsweise weist die Führungsplatte eine zur Anzahl der Aufnahmen beziehungsweise zur Anzahl der Leiterbrücken korrespondierenden Anzahl von Haltearmen auf, die jeweils ein Halteelement umfassen. Mittels jedes Halteelements ist eine der Leiterbrücken fixiert. Die Halteelemente sind insbesondere radial verlaufende Schlitze, Einkerbungen oder Nuten. Folglich ist jede Leiterbrücke mittels jeweils eines der Halteelemente und einer der Aufnahmen fixiert, sodass eine Bewegung der Leiterbrücken eingeschränkt ist. Zusammenfassend ist jeder Leiterbrücke und somit ebenfalls jeder Aufnahme genau ein Halteelement zugeordnet. Zweckmäßigerweise befindet sich jedes Halteelement in einem Endbereich der zugeordneten Leiterbrücke und die korrespondierende Aufnahme in dem verbleibenden Endbereich dieser Leiterbrücke. Vorteilhafterweise ist jede Aufnahme zu dem korrespondierenden Halteelement tangential beabstandet und insbesondere bezüglich der Rotationsachse im Wesentlichen um 90° versetzt, zumindest jedoch um z.B. 80°, 85°, 95° oder 100°.

In einer bevorzugten Weiterbildung ist jeder Haltearm im Vergleich zu der korrespondierenden Aufnahme tangential und radial versetzt, insbesondere nach außen hin. Infolgedessen verlaufen die Leiterbrücken ebenfalls radial und tangential und ein mechanischer Kontakt zwischen den Leiterbrücken kann ausgeschlossen werden. Beispielsweise ist die Richtung und/oder der Umfang der Versetzung aller Haltearmen bezüglich deren zugeordneter Aufnahme konstant. Zweckmäßigerweise sind die Leiterbrücken gleichgerichtet und verlaufen abschnittsweise parallel. Zumindest kreuzen sich insbesondere die Leiterbrücken nicht. Vorteilhafterweise ist jeder Haltearm bezüglich des Anschlusses, mit der die mittels des Haltearms fixierte Leiterbrücke elektrisch kontaktiert ist, in Axialrichtung versetzt. Insbesondere überdeckt das Halteelement jedes Haltearms in Axialrichtung einen der zugeordneten Anschlüsse. Mit anderen Worten ist die Projektion jedes Anschlusses in Axialrichtung auf die Haltearme zumindest teilweise innerhalb eines der Halteelemente. Zweckmäßigerweise verläuft jeder Anschluss im Wesentlichen axial zu der Kontaktstelle mit der jeweiligen Leiterbrücke, und der Verlauf jeder Leiterbrücke ist zwischen der jeweiligen Kontaktstelle und dem zugeordneten Halteelement ebenfalls axial. Auf diese Weise ist eine Führung und Montage der Leiterbrücken vereinfacht. Vorteilhafterweise sind die Haltearme in zwei Gruppen aufgeteilt, die im Wesentlichen punktsymmetrisch bezüglich der Rotationsachse angeordnet sind. Zumindest ist die Position der Halteelemente punktsymmetrisch bezüglich der Rotationsachse.

Folglich befinden sich die Leiterbrücken in einer bezüglich der Spulenwicklungen in Axialrichtung versetzten Ebene, wobei die Leiterbrücken hierbei vorzugsweise einen im Wesentlichen tangentialen und radialen Verlauf aufweisen. Mit anderen Worten ist die Leiterbrücke über sämtliche, sich zwischen den beiden Spulenwicklungen eines Spulenpaares befindenden Spulenwicklungen geführt, von denen jede, insbesondere mittels der Haltearme, zu der Leiterbahn beabstandet und somit elektrisch isoliert ist.

In einer alternativen Ausführungsform verlaufen die Aufnahmen axial und tangential. Mit anderen Worten ist mittels der Aufnahmen eine Schraubenform gebildet, sofern die Aufnahmen als Nuten Ausgeführt sind. In dieser Ausgestaltungsform verlaufen die Aufnahmen vorteilhafterweise etwa wendelartig oder schraubenförmig nach Art eines Außengewindes auf der Hohlzylinderoberfläche, sofern der Hohlzylinder vorhanden ist. Folglich sind die Aufnahmen unter einem Steigungswinkel gegenüber der Axialrichtung geneigt. Insbesondere verlaufen die Aufnahmen zumindest teilweise in Axialrichtung nebeneinander. In einer vorteilhaften Ausgestaltung sind die Aufnahmen in Axialrichtung zumindest abschnittsweise zu den Spulenwicklungen beabstandet und insbesondere bezüglich des Sterns der Führungsplatte, sofern dieser vorhanden ist. Auf diese Weise werden die Leiterbrücken mittels der Aufnahmen von den Spulenkörpern weggeführt und somit beabstandet, sodass ein Kontakt zwischen diesen oder eine zu einem elektrischen Überschlag führende Annäherung vermieden wird.

In einer bevorzugten Ausführung verlaufen die Aufnahmen radial sowie tangential. Dadurch ist eine Führungsgeometrie für die Leiterbrücken auf der Führungsplatte bereitgestellt, mit der eine möglichst einfache Montage gewährleistet ist. Weiterhin sind die Leiterbrücken somit in einem sicheren Abstand zueinander positioniert. Vorteilhafterweise sind die Aufnahmen in zumindest zwei Gruppen aufgeteilt, wobei der, insbesondere konstante, Abstand zwischen den Aufnahmen der gleichen Gruppe geringer ist, als der Abstand zu den Aufnahmen einer verbleibenden Gruppe. Somit sind die Leiterbrücken vergleichsweise weit voneinander beabstandet, wobei eine effiziente Wicklung der Spulenkörper der Elektromagnetenstruktur ermöglicht ist.

Die elektrische Maschine ist insbesondere eine Verstellantriebs eines Kraftfahrzeugs. Vorzugsweise ist der Verstellantrieb ein Servoantrieb eines Kraftfahrzeug-Lenksystems. Die elektrische Maschine umfasst eine Elektromagnetenstruktur mit einer Anzahl von zu einer Kreisstruktur angeordneten Spulen, die jeweils eine Spulenwicklung und einen Anschluss aufweisen. Die Spulen sind jeweils paarweise mittels einer Leiterbrücke elektrisch verbunden, wobei die jede Leiterbrücke mit den jeweiligen Anschlüssen kontaktiert ist. Jede Leiterbrücke ist in Axialrichtung von den zugordneten Spulen beabstandet, wobei jede Leiterbrücke zumindest teilweise in einer Aufnahmen einer Führungsplatte angeordnet ist. Insbesondere ist die Elektromagnetenstruktur Bestandteil eines Stators der als Elektromotor ausgeführten elektrischen Maschine, die vorteilhafterweise bürstenlos ist.

Nachfolgend werden Ausführungsbeispiele der Erfindung anhand einer Zeichnung näher erläutert. Darin zeigen:
- Fig. 1: in perspektivischer Darstellung eine Elektromagnetenstruktur mit zwölf Spulen und mit einer Führungsplatte,
- Fig. 2: in perspektivischer Darstellung ein Spulenpaar,
- Fig. 3: in perspektivischer Darstellung die Führungsplatte,
- Fig. 4: in Draufsicht die Führungsplatte gemäß Fig. 3,
- Fig. 5: in Seitendarstellung die Führungsplatte gemäß Fig. 3 oder Fig. 4,
- Fig. 6: in perspektivischer Darstellung eine weitere Ausführungsform der Elektromagnetenstruktur mit einer zweiten Ausgestaltung der Führungsplatte,
- Fig. 7: in perspektivischer Darstellung Führungsplatte gemäß Fig. 6,
- Fig. 8: in Draufsicht die Führungsplatte gemäß Fig. 7,
- Fig. 9: in Seitendarstellung die Führungsplatte gemäß Fig. 7 oder Fig. 8,
- Fig. 10: in perspektivischer Darstellung eine weitere Ausführungsform der Elektromagnetenstruktur mit einer dritten Ausgestaltung der Führungsplatte,
- Fig. 11: in Draufsicht die Elektromagnetenstruktur gemäß Fig. 10,
- Fig. 12: in perspektivischer Darstellung die Führungsplatte gemäß Fig. 10, und
- Fig. 13: in Draufsicht die Führungsplatte gemäß Fig. 11 oder Fig. 12.

Einander entsprechende Teile und Größen sind in allen Figuren mit den gleichen Bezugszeichen versehen.

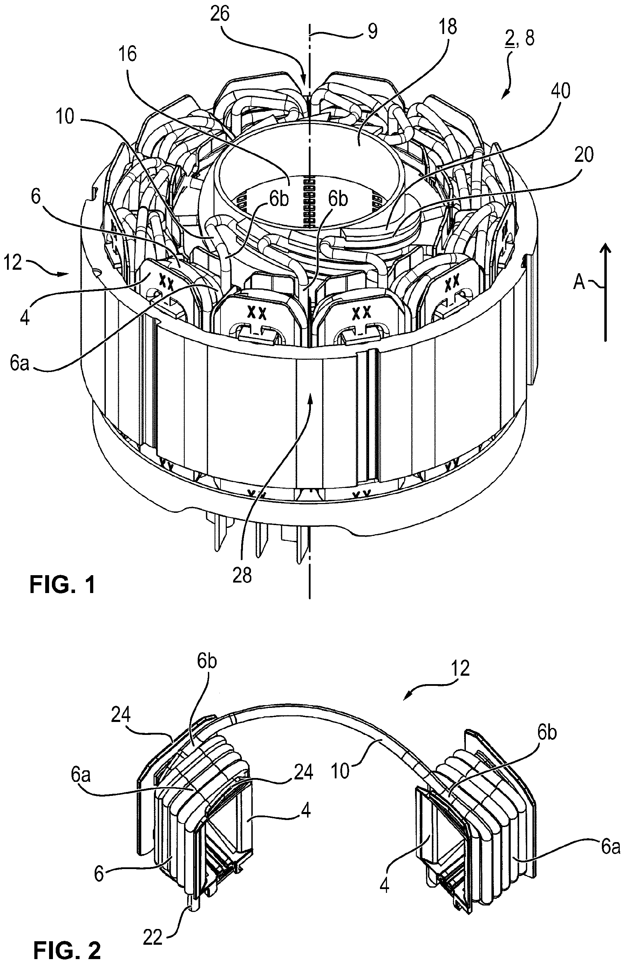

Fig. 1 zeigt eine Elektromagnetenstruktur 2 eines nicht näher dargestellten Elektromotors, wobei die Elektromagnetenstruktur 2 Bestandteil eines Stators des Elektromotors ist. Die Elektromagnetenstruktur 2 umfasst zwölf Spulenkörper 4 aus einem Kunststoff auf die jeweils eine Spule 6 gewickelt ist. Die Spulen 6 sind insbesondere aus einem lackierten Kupferdraht hergestellt und weisen jeweils eine Spulenwicklung 6a und einen Anschluss 6b auf (Fig. 2).

Die Spulenkörper 4 und die Spulen 6 sind zu einer ringförmigen Kreisstruktur 8 angeordnet. Im Inneren der Kreisstruktur 8 ist im Montagezustand ein Rotor des Elektromotors drehbar gelagert, der bei Betrieb aufgrund eines Erregerfelds der Elektromagnetenstruktur 2 um eine Rotationsachse 9 rotiert. Jeweils zwei Spulen 6 sind elektrisch leitend mittels einer Leiterbahn 10 elektrisch verbunden und als eine Baugruppe zu einem Spulenpaar 12 (Fig. 2) zusammengefasst. Hierfür ist jeder Leiterbrücken 10 mit den Anschlüssen 6b der jeweiligen Spulen 6 elektrisch kontaktiert. Die jeweilige Leiterbrücke 10 ist einstückig mit den entsprechenden Spulen 6. In den Figuren ist beispielhaft jeweils lediglich eine derartige Spulenpaar-Baugruppe 12 mit Bezugszeichen versehen.

Die Spulenpaare 12 sind derart orientiert, dass die zentralen Öffnungen der Spulenkörper 4 radial zur Kreisstruktur 8 orientiert sind. Die Axialrichtung A des Elektromotors und der hohlzylindrischen Kreisstruktur 8 ist parallel zur Rotationsachse 9.

Die sechs kaskadierenden Spulenpaare 12 werden im Betrieb des Elektromotors von einem elektrischen Drehstrom durchflossen und bilden sechs magnetische Polbereiche der Elektromagnetenstruktur 2. Die Spulenpaare 12 der Elektromagnetenstruktur 2 sind untereinander elektrisch in Reihe oder parallel geschaltet. Die Leiterbrücke 10 jedes Spulenpaares 12 erstreckt sich im Wesentlichen in Richtung der Rotationsachse 9.

Die Spulenkörper 4 sind auf nicht näher dargestellten Statorzähnen eines Statorblechpakets 16 angeordnet, wobei die Statorzähne als radial verlaufende sternförmige Fortsätze des Statorblechpakets 16 ausgebildet sind. Mit anderen Worten befinden sich die Fortsätze innerhalb der zentralen Öffnung jedes Spulenkörpers 4 und der darauf gewickelten Spulenwicklung 6a. Die beiden Spulenwicklungen 6a jedes Spulenpaars 12 ist hierbei auf Statorzähnen positioniert, die bezüglich der Rotationsachse 9 um im Wesentlichen 90° gegeneinander versetzt sind.

Auf dem Statorblechpaket 16 ist eine Führungsplatte 18 mit einer zur Anzahl der Leiterbrücken 10 korrespondierenden Anzahl von nutenförmigen Aufnahmen 20 angeordnet, wobei die Führungsplatte 18 auf dem Statorblech des Statorblechpakets 16 aufliegt, das in Axialrichtung A auf der Seite eines B-seitigen Lagerschildes ist. Die Führungsplatte 18 ist also gegenüber einem Wellenausgang des Elektromotors angeordnet. Die Führungsplatte 18 ist aus einem elektrisch nicht leitfähigen Kunststoff gefertigt. Im Montagezustand ist - wie in Fig. 1 ersichtlich - in jeder der Aufnahmen 20 eine Leiterbrücke 10 angeordnet und in dieser klemmfixiert. Die Führungsplatte 18 ist somit in Axialrichtung A zumindest teilweise zwischen den Spulenwicklungen 6a und den Leiterbrücken 10 angeordnet.

In Fig. 2 ist ein Spulenpaar 12 exemplarisch detailliert dargestellt. Die Spulen 6 weisen jeweils ein Kontaktierende 22 auf, das mittels der jeweiligen Spulenwicklung 6a mit dem Anschluss 6b elektrisch leitend verbunden und einstückig mit diesen ist. Die Kontaktierenden 22 sind zur Steuerung und Versorgung der Elektromagnetenstruktur 2 mit einer nicht näher dargestellten Steuereinrichtung und Stromquelle des Elektromotors gekoppelt. Die beiden Anschlüsse 6b sind mittels der Leiterbrücke10 elektrisch kontaktiert. Bei der Herstellung werden die beiden Spulen 6 und die Leiterbrücke 10 aus einem gemeinsamen Draht gewickelt. Die Spulen 6 sowie die Leiterbahn 10 sind somit einstückig aus einem Kupferdraht ausgeführt, der mittels einer Einzelzahnwickeltechnik um die Spulenkörper 4 gewickelt ist. Die Spulenkörper 4 sind im Wesentlichen rechteckförmige Spritzgussbauteile aus elektrisch nicht leitendem Kunststoff, welche in radialer Richtung - zum Innen- und Außenumfang der Kreisstruktur 8 hin - eine Haltewand 24 aufweisen. In axialer Richtung A weist der Spulenkörper 4 somit einen im Wesentlichen H-förmigen Querschnitt auf, wobei die Spulenwicklungen 6a um den horizontalen H-Schenkel gewickelt sind.

Die Kontaktierenden 22 sind mit den benachbarten Spulenpaaren 12 der gleichen Phase über eine Schweiß- oder Lötverbindung, durch Verpressung oder dergleichen kontaktiert. Die Elektromagnetenstruktur 2 umfasst im Wesentlichen - wie in Fig. 1 dargestellt - eine erste Spulenpaarbaugruppe 26 und eine zweite Spulenpaarbaugruppe 28. Die Spulenpaarbaugruppen 26, 28 umfassen jeweils drei Spulenpaare 12, die untereinander derart kaskadiert elektrisch in Reihe geschalten sind, dass im Betrieb jede Leiterbrücke 10 der Spulenpaarbaugruppe 26, 28 eine unterschiedliche Stromphase führt. Zur galvanischen Trennung der Stromphasen zwischen benachbarten Leiterbrücken 10 sind die Leiterbrücken 10 im Bereich der Führungsplatte 18 innerhalb der Aufnahmen 20 verlegt. Dadurch ist die Position der Leiterbrücke 10 stabilisiert und eine Bewegung derselben gegen eine weitere elektrisch leitende Komponente, insbesondere einer benachbarten Leiterbrücke 10, während des Betriebs des Elektromotors verhindert.

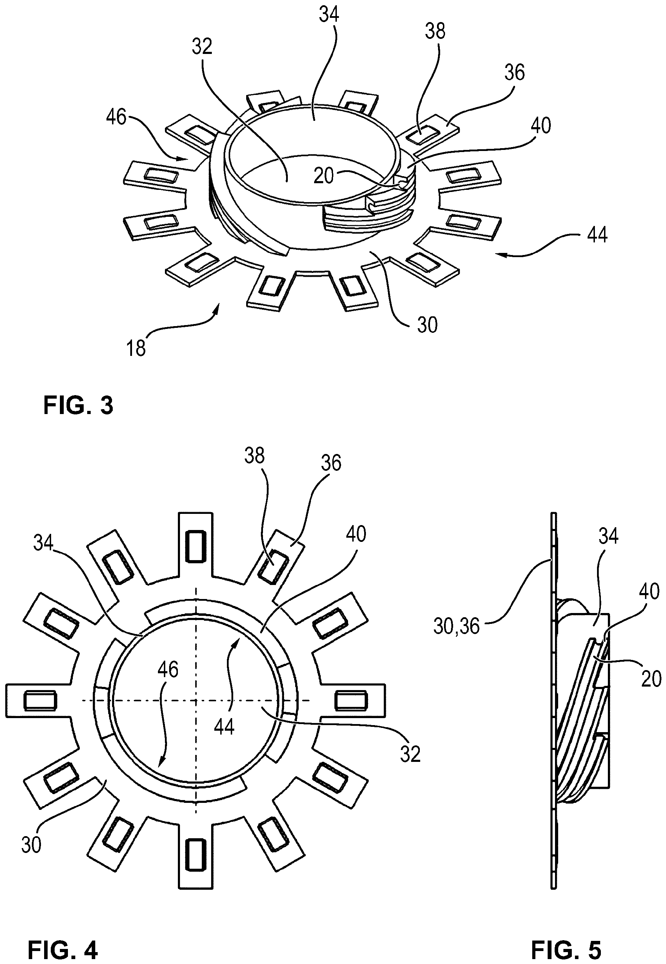

Eine erste Ausführungsform der Führungsplatte 18 nach Art einer Gewindeführung ist in Fig. 3 bis Fig. 5 dargestellt. In Fig. 3 ist die Führungsplatte 18 mit einer sternförmigen Sternplatte 30 und einem eine zentrale Aussparung 32 aufweisenden Hohlzylinder 34 dargestellt, der in Axialrichtung A angeordnet ist. Auch die Sternplatte 30 weist mittig die kreisförmige Aussparung 32 auf und ist einstückig mit dem Hohlzylinder 34.

Die Sternplatte 30 weist zwölf radial überstehende, den Spulenkörpern 4 zugewandte und radial verlaufende, Fortsätze 36 auf. Die Fortsätze 36 der Sternplatte 30 sind im Montagezustand auf dem Statorblechpaket 16 derart angeordnet, dass alle Fortsätze 36 mit dem Statorblechpaket 16 fluchten. Jeder Fortsatz 36 weist eine Blattfeder 38 zum Zwecke einer zerstörungsfreien Klemmbefestigung der Spulenkörper 4 auf. Beispielhaft sind in den Figuren lediglich ein Fortsatz 36 und eine Blattfeder 38 mit einem Bezugszeichen versehen.

An der äußeren Mantelfläche des Hohlzylinders 34 sind sechs radial überstehende Führungsprofile 40 angeformt, in die jeweils eine der Aufnahmen 20 eingebracht ist. Die Führungsprofile 40 verlaufen axial und tangential, so dass der Verlauf der Aufnahmen 20 schraubenförmig nach Art eines Außengewindes ist. Folglich sind die Aufnahmen 20 unter einem Neigungswinkel gegen die Axialrichtung A orientiert, wobei die Aufnahmen 20 der Spulenbaugruppen 26, 28 zumindest abschnittsweise in Axialrichtung benachbart angeordnet sind. Der Neigungswinkel ist derart gewählt, dass sich die Aufnahmen 20 auf dem halben Umfang des Hohlzylinders 34 im Wesentlichen über dessen gesamte Höhe erstreckt. Die Leiterbrücken 10 werden somit - wie in Fig. 1 dargestellt - im Wesentlichen über ihre gesamte Länge mittels der Aufnahmen 20 geführt und isoliert. Die Aufnahmen 20 sind an die Querschnittsform der Leiterbrücken 10 angepasst, und weisen als Querschnitt im Wesentlichen ein Kreissegment größer als 180° auf. Die Führungsprofile 40 sind gleichmäßig auf den beiden Halbzylinderflächen des Hohlzylinders 34 angeordnet, das heißt jeweils drei Führungsprofile 40 sind als eine Führungsprofilgruppe 44 und 46 zu den entsprechenden Spulenbaugruppen 26 und 28 hin orientiert.

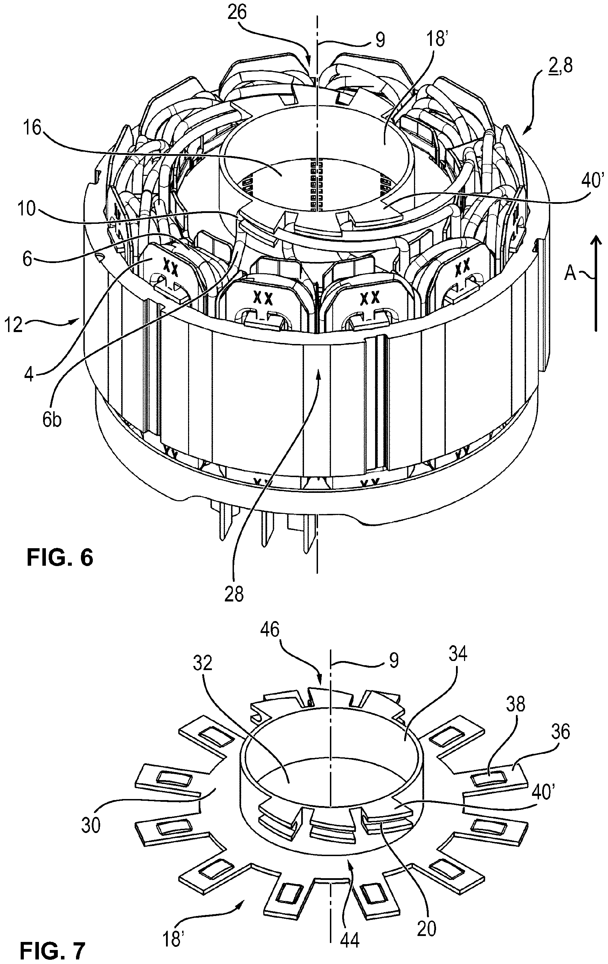

Anhand der Fig. 6 bis Fig. 9 ist im Nachfolgenden eine zweite alternative Ausführungsform der Führungsplatte 18' nach Art einer Stufenführung erläutert. Der Aufbau der Führungsplatte 18' ist im Wesentlichen identisch zu dem Aufbau der Führungsplatte 18, wobei lediglich die Ausgestaltung der Aufnahmen 20 und der Führungsprofile 40' variiert. Alle sechs am Hohlzylinder 34 angeformte Führungsprofile 40' sind in einer Ebene senkrecht zur Axialrichtung A angeordnet und zueinander radial beabstandet. Die Führungsprofile 40' weisen in Axialrichtung A einen etwa trapezartigen Querschnitt auf und sind im Vergleich zu den Führungsprofilen 40' kürzer ausgestaltet. Die Führungsprofilgruppe 44, 46 sind zueinander beabstandet angeordnet und erstrecken sich aufgrund der geänderten Geometrie der Führungsprofile 40' lediglich jeweils über etwa ein Viertel des Umfangs des Hohlzylinders 34. Die Führungsprofile 40' sind zudem in Radialrichtung weiter überstehend als die Führungsprofile 40. Die Aufnahmen 20 befinden sich folglich ebenfalls in einer Ebene senkrecht zur Axialrichtung A. Hierbei verlaufen die Aufnahmen 20 radial und tangential. Die Leiterbrücken 10 werden somit mittels der Aufnahmen 20 radial nach innen geführt. Die Montage der Leiterbrücken 10 erfolgt hierbei mittels Aufschieben der Spulen 6 auf das Statorblechpaket 16 und die Führungsplatte 18'.

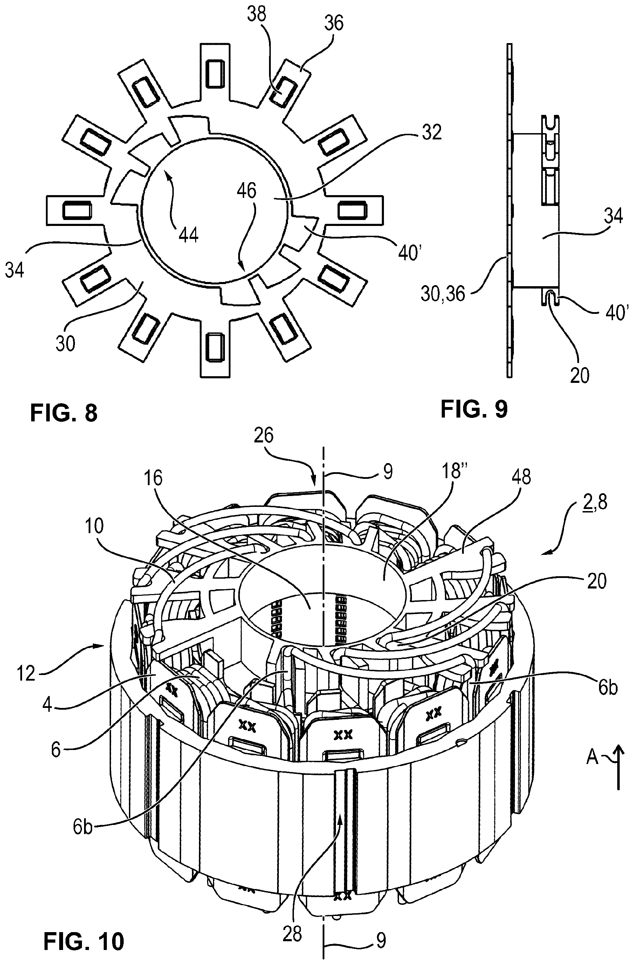

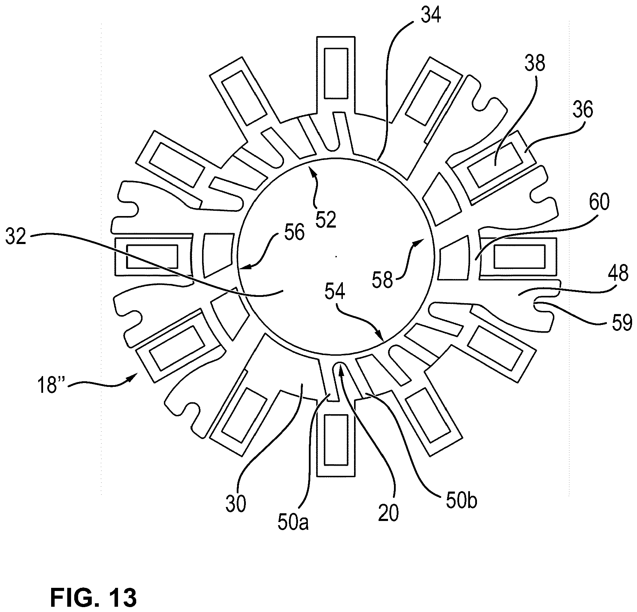

In der Fig. 10 bis Fig. 13 ist eine dritte Ausführungsform der Führungsplatte 18" dargestellt. In dieser Ausführungsvariante weist die Führungsplatte 18" eine Anzahl von an den Hohlzylinder 34 angeformten Haltearmen 48 und Führungsrippen 50a, 50b auf. Die Führungsrippen 50a, 50b sind zu zwei Führungsrippengruppen 52, 54 und die Haltearme 48 zu zwei Haltearmgruppen 56, 58 zusammengefasst, wobei die Gruppen um 180° zueinander bezüglich der Rotationsachse versetzt sind. Der Winkel zwischen benachbarten Haltearmen 48 und Führungsrippen 50a, 50b einer gemeinsamen Gruppe hingegen ist kleiner und in etwa 30°.

Die Führungsrippen 50a, 50b sind radial nach außen weisende Fortsätze, die sich im Wesentlichen in Axialrichtung A entlang der gesamte Höhe des Hohlzylinders 34 erstrecken. Jeder Führungsrippenbaugruppe 52, 54 weist fünf Führungsrippen 50a, 50b auf, wobei sich die Führungsrippenbaugruppe 52, 54 auf etwa ein Viertel des Hohlzylinderumfangs erstreckt. Jeweils drei Führungsrippen 50a fluchten in einem Fortsatz 36 der Sternplatte 30. Zwischen zwei benachbarten Führungsrippen 50a ist jeweils etwa mittig eine Führungsrippe 50b angeordnet. Mittels des Zwischenraums zwischen den jeweiligen Führungsrippen 50a, 50b ist jeweils eine Aufnahme 20 gebildet. An die Führungsrippenbaugruppe 52, 54 schließt sich in Umfangsrichtung die Haltearmgruppe 56, 58 an.

Jede Haltearmgruppe 56, 58 umfasst drei radial orientierte etwa Y-förmige Haltearme 48, wobei jeweils das Freiende des vertikalen Y-Schenkel am Hohlzylinder 34 angebunden ist. Die Haltearme 48 liegen in einer Ebene, die parallel zur Ebene ist, in der die Fortsätze 36 liegen, und die senkrecht zur Axialrichtung A ist. Hierbei befinden sich die Haltearme 48 an dem dem Stern 30 gegenüberliegenden Ende des Hohlzylinders 34. In tangentialer Richtung sind die Haltearme 48 jeweils zwischen zwei benachbarten Fortsätzen 36 angeordnet und erstrecken sich in radialer Richtung von dem Hohlzylinder 34 bis zu dem durch die Fortsätze 36 gebildeten Umfang der Führungsplatte 18". Zwischen den beiden Y-Schenkeln jedes Haltearms 48 ist ein Halteelement 59 in Form einer radialen Einkerbung gebildet. Zwischen benachbarten Haltearmen 48 sind kreissegmentartige Seitenwände 60 für eine verbesserte Stabilität angeordnet, deren Ausdehnung in Axialrichtung A der des Hohlzylinders 34 entspricht. Die Seitenwände 60 fluchten im Bereich zwischen den Fortsätzen 36 mit der Sternplatte 30, und sind etwa an der Basis der Y-Arme angeordnet.

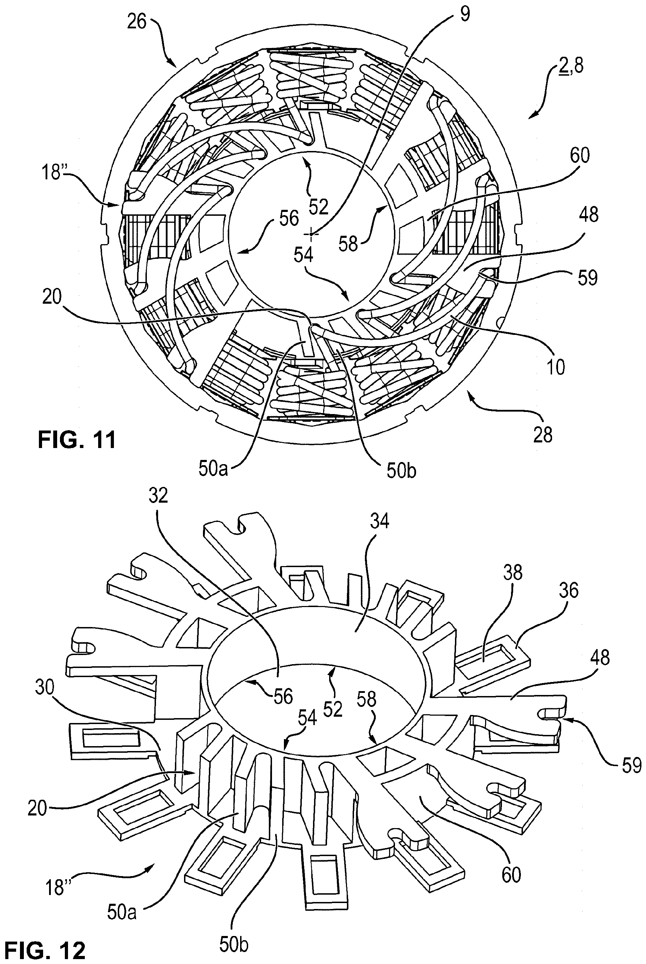

Wie in Fig. 10 ersichtlich ist, sind die Leiterbrücken 10 mittels der Halteelemente 59 des jeweiligen Haltearms 48 gehalten, und verlaufen- wie in Fig. 11 dargestellt - spiralarmartig zu jeweils einer der Aufnahmen 20. Im Bereich des radial außenliegenden Anschlusses 6b jedes Spulenpaars 12 ist das jeweilige Halteelement 59 in Axialrichtung A zu dem jeweiligen Anschluss 6b beabstandet, in tangentialer und radialer Richtung jedoch nicht. Der diesen Anschluss 6b und die Leiterbrücke 10 bildende Draht ist unter Bildung unter anderem des Anschlusses 6b vergleichsweise straff zwischen der Spulenwicklung 6a, dem Halteelement 59 und der Aufnahme 20 geführt. Infolgedessen verläuft jede Leiterbrücken 10 von dem radial äußeren Bereich jeweils einer der Spulen 6 zu dem radial inneren Bereich einer weiteren der Spulen 6, wobei die Leiterbrücke 10 mittels der zugeordneten Aufnahme 20 und dem zugeordneten Halteelement 59 vergleichsweise straf gespannt ist, was ein Berühren mit einer weiteren der Leiterbrücken 10 verhindert. Auch eine Berührung der einzelnen Anschlüsse 6b der Spulen 6 untereinander ist aufgrund einerseits der straffen Spannung und andererseits aufgrund der Führungsrippen 50a, 50b verhindert.

Die Erfindung ist nicht auf die vorstehend beschriebenen Ausführungsbeispiele beschränkt. Vielmehr können auch andere Varianten der Erfindung von dem Fachmann hieraus abgeleitet werden ohne den Gegenstand der Erfindung zu verlassen. Insbesondere sind ferner alle im Zusammenhang mit den verschiedenen Ausführungsbeispielen beschriebenen Einzelmerkmale auch auf andere Weise miteinander kombinierbar, ohne den Gegenstand der Erfindung zu verlassen.

### Bezugszeichenliste

- 2: Elektromagnetenstruktur
- 4: Spulenkörper
- 6: Spule
- 6a: Spulenwicklung
- 6b: Spulenanschluss
- 8: Kreisstruktur
- 9: Rotationsachse
- 10: Leiterbrücke
- 12: Spulenpaar
- 16: Statorblechpaket
- 18, 18', 18": Führungsplatte
- 20: Aufnahme
- 22: Kontaktierende
- 24: Haltewand
- 26: Spulenbaugruppe
- 28: Spulenbaugruppe
- 30: Sternplatte
- 32: Aussparung
- 34: Hohlzylinder
- 36: Fortsatz
- 38: Blattfeder
- 40,40': Führungsprofil
- 44: Führungsprofilgruppe
- 46: Führungsprofilgruppe
- 48: Haltearm
- 50a, 50b: Führungsrippe
- 52: Führungsrippengruppe
- 54: Führungsrippengruppe
- 56: Haltearmgruppe
- 58: Haltearmgruppe
- 59: Halteelement
- 60: Seitenwand
- A: Axialrichtung

## Patentansprüche

1. Elektromagnetenstruktur (2) einer elektrischen Maschine, insbesondere eines Verstellantriebs eines Kraftfahrzeugs, mit einer Anzahl von zu einer Kreisstruktur (8) angeordneten Spulen (6), die jeweils eine Spulenwicklung (6a) und einen Anschluss (6b) aufweisen,
- wobei die Spulen (6) jeweils paarweise mittels einer Leiterbrücke (10) elektrisch verbunden sind, die mit den jeweiligen Anschlüssen (6b) kontaktiert ist,
- wobei jede Leiterbrücke (10) in Axialrichtung (A) von den zugeordneten Spulenwicklungen (6) beabstandet ist,
- wobei jede Leiterbrücke (10) zumindest teilweise in einer Aufnahmen (20) einer Führungsplatte (18, 18', 18") angeordnet ist, **dadurch gekennzeichnet, dass**
- die Führungsplatte (18, 18', 18") einen Stern (30) mit radial gerichteten Fortsätzen (36) aufweist, und
- jeder der Fortsätze (36) innerhalb jeweils einer der Spulenwicklungen (6a) angeordnet ist.

2. Elektromagnetenstruktur (2) nach Anspruch 1,
**dadurch gekennzeichnet,**
**dass** die Aufnahmen (20) bezüglich der Spulenwicklungen (6a) radial beabstandet sind.

3. Elektromagnetenstruktur (2) nach Anspruch 1 oder 2,
**dadurch gekennzeichnet,**
**dass** jeder der Fortsätze (36) ein Federelement (38) aufweist, mittels dessen die jeweilige Spule (6) klemmfixiert ist.

4. Elektromagnetenstruktur (2) nach Anspruch 3,
**gekennzeichnet durch**
ein Blechpaket (16), wobei der Stern (30) in direktem mechanischem Kontakt mit dem Blechpaket (16) ist.

5. Elektromagnetenstruktur (2) nach einem der Ansprüche 1 bis 4,
**dadurch gekennzeichnet,**
**dass** die Aufnahmen (20) axial angeordnet und tangential zueinander beabstandet sind, und dass die Führungsplatte (18, 18', 18") eine zur Anzahl der Aufnahmen (20) korrespondierende Anzahl von Haltearmen (48) mit jeweils einem Halteelement (59) aufweist, wobei mittels jedes Halteelements (59) eine der Leiterbrücken (10) fixiert ist.

6. Elektromagnetenstruktur (2) nach Anspruch 5,
**dadurch gekennzeichnet,**
**dass** die Halteelemente (59) im Vergleich zu den Aufnahmen (20) radial versetzt sind, und/oder in Axialrichtung (A) zu den Anschlüssen (6b) versetzt sind.

7. Elektromagnetenstruktur (2) nach einem der Ansprüche 1 bis 4,
**gekennzeichnet durch**
axial und tangential verlaufende Aufnahmen (20), wobei insbesondere die Aufnahmen (20) zumindest teilweise in Axialrichtung (A) benachbart angeordnet sind.

8. Elektromagnetenstruktur (2) nach einem der Ansprüche 1 bis 4,
**gekennzeichnet durch**
radial und tangential verlaufende Aufnahmen (20).

9. Elektromagnetenstruktur (2) nach Anspruch 7 oder 8,
**dadurch gekennzeichnet,**
**dass** die Aufnahmen (20) in Axialrichtung (A) zu den Spulenwicklungen (6a) zumindest abschnittsweise beabstandet sind.

10. Elektrischen Maschine, insbesondere eines Verstellantriebs eines Kraftfahrzeugs, mit einer Elektromagnetenstruktur (2) nach einem der Ansprüche 1 bis 9.

## Claims

1. Electromagnet structure (2) of an electric machine, in particular an adjustment drive of a motor vehicle, said electromagnet structure having a number of coils (6) that are arranged in a circular structure (8), said coils comprising in each case a coil winding (6a) and a connector (6b),
- wherein the coils (6) in each case are electrically connected in pairs by means of a conductor bridge (10), said conductor bridge being contacted by means of the respective connectors (6b),
- wherein each conductor bridge (10) is spaced in the axial direction (A) from the allocated coil windings (6),
- wherein each conductor bridge (10) is arranged at least in part in a receiving arrangement (20) of a guiding plate (18, 18', 18"),
**characterized in that**
- the guiding plate (18, 18', 18") comprises a star (30) having radially aligned projections (36), and
- each of the projections (36) is arranged within in each case one of the coil windings (6a).

2. Electromagnet structure (2) according to Claim 1,
**characterized in that**
the receiving arrangements (20) are radially spaced in relation to the coil windings (6a).

3. Electromagnet structure (2) according to Claim 1 or 2,
**characterized in that**
each of the projections (36) comprises a resilient element (38) by means of which the respective coil (6) is fixed in a clamped manner.

4. Electromagnet structure (2) according to Claim 3,
**characterized by** means of
a stator laminated core (16), wherein the star (30) is in direct mechanical contact with the stator laminated core (16).

5. Electromagnet structure (2) according to any one of the Claims 1 to 4,
**characterized in that**
the receiving arrangements (20) are arranged axially and spaced tangentially with respect to one another, and that the guiding plate (18, 18', 18") comprises a number of retaining arms (48) that corresponds to the number of receiving arrangements (20), said retaining arms in each case having a retaining element (59), wherein one of the conductor bridges (10) is fixed by means of each retaining element (59).

6. Electromagnet structure (2) according to Claim 5,
**characterized in that**
the retaining elements (59) are radially offset in comparison with the receiving arrangements (20), and/or are offset in the axial direction (A) with respect to the connectors (6b).

7. Electromagnet structure (2) according to any one of the Claims 1 to 4,
**characterized by** means of
receiving arrangements (20) that extend axially and tangentially, wherein in particular the receiving arrangements (20) are arranged adjacent to one another at least in part in the axial direction (A).

8. Electromagnet structure (2) according to any one of the Claims 1 to 4,
**characterized by** means of
receiving arrangements (20) that extend radially and tangentially.

9. Electromagnet structure (2) according to Claim 7 or 8,
**characterized in that**
the receiving arrangements (20) are spaced in the axial direction (A) with respect to the coil windings (6a) at least in sections.

10. Electric machine, in particular an adjustment drive of a motor vehicle, said electric machine having an electromagnet structure (2) according to any one of the Claims 1 to 9.

## Revendications

1. Structure électromagnétique (2) d'une machine électrique, notamment d'un entraînement de réglage d'un véhicule automobile, comportant une pluralité de bobines (6) disposées en formant une structure circulaire (8) et présentant respectivement un enroulement de bobine (6a) et une borne (6b),
- dans laquelle les bobines (6) sont reliées électriquement par paires au moyen d'un pont conducteur (10) qui est en contact avec les bornes (6b) respectives,
- dans laquelle chaque pont conducteur (10) est espacé des enroulements de bobine (6) associés dans la direction axiale (A),
- dans laquelle chaque pont conducteur (10) est disposé au moins en partie dans un logement (20) d'une plaque de guidage (18, 18', 18"),
**caractérisée en ce que**
- la plaque de guidage (18, 18', 18") comporte une étoile (30) munie de parties saillantes (36) orientées radialement, et
- chacune desdites parties saillantes (36) est disposée à l'intérieur de l'un respectif desdits enroulements de bobine (6a).

2. Structure électromagnétique (2) selon la revendication 1, **caractérisée en ce que** les logements (20) sont espacés radialement par rapport aux enroulements de bobines (6a).

3. Structure électromagnétique (2) selon la revendication 1 ou 2, **caractérisée en ce que** chacune des parties saillantes (36) comporte un élément élastique (38) au moyen duquel la bobine respective (6) est fixée par serrage.

4. Structure électromagnétique (2) selon la revendication 3, **caractérisée par** un paquet de tôles (16), dans laquelle l'étoile (30) est en contact mécanique direct avec le paquet de tôles (16).

5. Structure électromagnétique (2) selon l'une des revendications 1 à 4, **caractérisée en ce que** les logements (20) sont disposés de manière axiale et sont espacés de manière tangentielle les uns des autres, et **en ce que** la plaque de guidage (18, 18', 18") comporte un nombre de bras de maintien (48) correspondant au nombre des logements (20) et comportant respectivement un élément de retenue (59), dans laquelle l'un des ponts conducteurs (10) est fixé au moyen de chaque élément de maintien (59).

6. Structure électromagnétique (2) selon la revendication 5, **caractérisée en ce que** les éléments de maintien (59) sont décalés radialement par rapport aux logements (20) et/ou dans la direction axiale (A) par rapport aux bornes (6b).

7. Structure électromagnétique (2) selon l'une des revendications 1 à 4, **caractérisée par** des logements (20) s'étendant axialement et tangentiellement, dans laquelle les logements (20) sont notamment disposés au moins en partie de manière adjacente dans la direction axiale (A).

8. Structure électromagnétique (2) selon l'une des revendications 1 à 4, **caractérisée par** des logements (20) s'étendant radialement et tangentiellement.

9. Structure électromagnétique (2) selon la revendication 7 ou 8, **caractérisée en ce que** les logements (20) sont espacés au moins par sections dans la direction axiale (A) des enroulements de bobines (6a) .

10. Machine électrique, en particulier entraînement de réglage d'un véhicule automobile, comportant une structure électromagnétique (2) selon l'une des revendications 1 à 9.
